# EUROPÄISCHE PATENTSCHRIFT

(11) **EP 3 625 095 B1**
(45) Veröffentlichungstag und Bekanntmachung des Hinweises auf die Patenterteilung: **10.08.2022**
(21) Anmeldenummer: 18721317.8
(22) Anmeldetag: 24.04.2018
(51) Int. Cl.: B60T 8/40

(54) **BREMSANLAGE SOWIE VERFAHREN ZUM BETRIEB EINER BREMSANLAGE**
BRAKE SYSTEM AND METHOD FOR OPERATING A BRAKE SYSTEM
SYSTÈME DE FREINAGE ET PROCÉDÉ POUR FAIRE FONCTIONNER UN SYSTÈME DE FREINAGE

(30) Priorität: 16.05.2017 DE 102017208178
(43) Veröffentlichungstag der Anmeldung: 25.03.2020
(73) Patentinhaber: Continental Automotive Technologies GmbH, 30165 Hannover (DE)
(72) Erfinder: LINHOFF, Paul, 61267 Neu-Anspach (DE); BESIER, Marco, 65307 Bad Schwalbach (DE); DRUMM, Stefan, 55291 Saulheim (DE); HEISE, Andreas, 64390 Erzhausen (DE)
(74) Vertreter: Continental Corporation
(86) Internationale Anmeldenummer: PCT/EP2018/060397
(87) Internationale Veröffentlichungsnummer: WO 2018/210534

(56) Entgegenhaltungen:
- WO-A1-00/68053
- DE-A1-102013 224 870

## Beschreibung

Die Erfindung betrifft eine Bremsanlage gemäß dem Oberbegriff von Anspruch 1 und ein Verfahren zum Betrieb einer Bremsanlage gemäß dem Oberbegriff von Anspruch 8.

Aus der DE 10 2013 224 870 A1 ist eine "Brake-by-wire"-Bremsanlage für Kraftfahrzeuge bekannt, welche einen bremspedalbetätigbaren Tandem-Hauptbremszylinder, dessen beiden Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Aktuator verschiebbar ist, umfasst. Die Bremsanlage umfasst weiterhin an den Radbremsen der Hinterräder angeordnete, elektrisch betätigbare Parkbremsaktuatoren, mittels welchen in einem Notfall eine Unterstützung einer Betriebsbremsung durchgeführt werden kann. In der hydraulischen Rückfallbetriebsart der Bremsanlage werden die hydraulisch betätigbaren Radbremsen beider Achsen mit dem Druck des Hauptbremszylinders beaufschlagt. Dies bewirkt durch die in Summe relativ hohe Druckmittelvolumenaufnahme der Radbremsen einen relativ langen Bremspedalweg.

Aus der WO 0068053 A1 ist eine Bremsanlage bekannt, bei der in eine Rückfallebene sowohl die Vorderradbremsen, als auch die Hinterradbremsen hydraulisch betätigt werden, die Hinterradbremsen jedoch zusätzlich durch eine elektromechanische Parkbremse unterstützt werden, um eine volle Verzögerung zu erreichen.

Grundsätzlich ist zu beachten, dass in einer "Brake-by-wire"-Bremsanlage nach Ausfall der "Brake-by-wire"-Betriebsart dem Fahrer ggf. nur noch eine hydraulisch/mechanische Rückfallebene zur Verfügung steht. In der Wirkung bedeutet das, dass nur die vom Fahrerfuß eingebrachte Kraft zum Zuspannen der hydraulischen Radbremsen zur Verfügung steht. Die Fahrerfußkraft wird üblicherweise als auf 500 Newton begrenzt betrachtet. Die hiermit erreichbare Verzögerung liegt signifikant unterhalb der Vollverzögerung auf trockener Straße, je nach Fahrzeuggewicht und Ausführung der hydraulischen Reibungsbremsen und dem Verhältnis des Wirkradius der Bremse im Verhältnis zur Rollradius der Räder. Schwere Fahrzeuge (z.B. SUV) mit großen Rädern sind besonders benachteiligt. Um mit der zur Verfügung stehenden Fahrerfußkraft eine möglichst hohe Verzögerung zu erreichen, ist zudem die Auslegung des Hauptbremszylinderdurchmessers eher klein gewählt. Das bewirkt zwar einen eher höheren Druck, allerdings mit dem Nachteil eines stark verlängerten Bremspedalwegs.

Es ist Aufgabe der vorliegenden Erfindung, eine Bremsanlage sowie ein Verfahren zum Betrieb einer Bremsanlage bereitzustellen, welche bzw. welches bei komfortablen Bremspedalwegen eine höhere Bremsverzögerung erreicht.

Diese Aufgabe wird erfindungsgemäß durch eine Bremsanlage gemäß Anspruch 1 und ein Verfahren zum Betrieb einer Bremsanlage gemäß Anspruch 8 gelöst.

Der Erfindung liegt der Gedanke zugrunde, dass in einer hydraulischen Rückfallbetriebsart der Bremsanlage bei einer Bremspedalbetätigung durch einen Fahrzeugführer ausschließlich die hydraulisch betätigbaren Radbremsen an den Vorderräder mit dem Hauptbremszylinder verbunden sind und mittels des Hauptbremszylinders durch den Fahrzeugführer mit Druck beaufschlagt werden, während die Hinterräder ausschließlich mittels der elektromotorisch betätigbaren Radbremsen gebremst werden.

Die Erfindung bietet den Vorteil einer vollen Ausschöpfung des Verzögerungspotentials an der Hinterachse ohne Verwendung der Fahrerfußenergie. Die Fahrerfußenergie wird auf die Bremswirkung der Vorderachse konzentriert und damit in Summe eine höhere Verzögerung erreicht.

Erfindungsgemäß ist die hydraulische Betriebsbremsvorrichtung derart ausgeführt, dass im stromlosen Zustand der hydraulischen Betriebsbremsvorrichtung der Hauptbremszylinder lediglich mit den hydraulisch betätigbaren ersten Radbremsen an den Vorderrädern verbunden ist.

Alternativ ist die hydraulische Betriebsbremsvorrichtung erfindungsgemäß derart ausgeführt, dass im stromlosen Zustand der hydraulischen Betriebsbremsvorrichtung der Hauptbremszylinder mit den hydraulisch betätigbaren ersten Radbremsen an den Vorderrädern und mit den hydraulisch betätigbaren zweiten-Radbremsen an den Hinterrädern verbunden ist, wobei die Einlassventile der hydraulischen Hinterradbremsen geschlossen werden.

Bevorzugt umfasst die elektronische Steuer- und Regeleinheit zumindest ein erstes elektrisches und/oder elektronisches Mittel zur Ansteuerung der elektrisch betätigbaren Komponenten der hydraulischen Betriebsbremsvorrichtung und zumindest ein zweites, von dem ersten Mittel getrennt ausgeführtes, elektrisches und/oder elektronisches Mittel zur Ansteuerung der elektromotorisch betätigbaren Radbremsen. So können bei einem Ausfall des ersten Mittels zur Ansteuerung der hydraulischen Betriebsbremsvorrichtung dennoch in der hydraulischen Rückfallbetriebsart die Hinterräder mittels der elektromotorisch betätigbaren Radbremsen gebremst werden. Dies erhöht die Verfügbarkeit für Bremsungen mit hoher Verzögerung.

Dem zweiten Mittel werden bevorzugt die Signale von an den Vorder- und Hinterrädern angeordneten Raddrehzahlsensoren zugeführt. So liegen im zweiten Mittel die notwendigen Daten für eine Radschlupfregelung an den Hinterrädern mittels der Parkbremsvorrichtung vor.

Das zweite elektrische und/oder elektronische Mittel ist bevorzugt zur Ausführung einer Radschlupfregelung an den Hinterrädern mittels der elektromotorisch betätigbaren Radbremsen ausgebildet. So lässt sich auch bei einem Ausfall des ersten Mittels mittels des zweiten Mittels eine Radschlupfregelung an den Hinterräder durch die elektromotorisch betätigbaren Radbremsen durchführen.

Bevorzugt werden die Raddrehzahlsensorsignale von dem zweiten Mittel an das erste Mittel übertragen.

Gemäß einer bevorzugten Ausführungsform werden das erste Mittel und das zweite Mittel durch eine erste elektrische Energiequelle mit elektrischer Energie versorgt.

Gemäß einer anderen bevorzugten Ausführungsform wird das erste Mittel durch eine erste elektrische Energiequelle mit elektrischer Energie versorgt, und das zweite Mittel durch eine zweite, unabhängige elektrische Energiequelle mit elektrischer Energie versorgt.

Bevorzugt ist das zweite Mittel zusätzlich zur Ansteuerung der Einlassventile der zweiten Radbremsen ausgebildet. Dies ist insbesondere vorteilhaft bei einer hydraulischen Betriebsbremsvorrichtung, bei welcher im stomlosen Zustand der hydraulischen Betriebsbremsvorrichtung der Hauptbremszylinder mit den hydraulisch betätigbaren ersten und zweiten Radbremsen verbunden ist. So können im stromlosen Fall der hydraulischen Betriebsbremsvorrichtung mittels des zweiten Mittels die Einlassventile der zweiten Radbremsen geschlossen werden, damit die zweiten Radbremsen in der hydraulischen Rückfallbetriebsart nicht mit dem Hauptbremszylinder verbunden sind.

Die Erfindung betrifft auch ein Verfahren zum Betrieb einer "brake-by-wire"-Bremsanlage gemäß Anspruch 8 mit einer hydraulischen Betriebsbremsvorrichtung für Vorder- und Hinterrädern und einer Parkbremsvorrichtung mit elektromotorisch betätigbaren Radbremsen an den Hinterrädern. Dabei sind in einer hydraulischen Rückfallbetriebsart der Bremsanlage bei einer Bremspedalbetätigung durch einen Fahrzeugführer ausschließlich die hydraulischen Vorderradbremsen mit dem Hauptbremszylinder verbunden und werden mittels des Hauptbremszylinders durch den Fahrzeugführer mit Druck beaufschlagt, während die Hinterräder ausschließlich mittels der elektromotorisch betätigbaren Radbremsen gebremst werden.

Erfindungsgemäß werden in der hydraulischen Rückfallbetriebsart die Einlassventile der hydraulischen Hinterradbremsen geschlossen, so dass ausschließlich die hydraulischen Vorderradbremsen mit dem Hauptbremszylinder verbunden sind und mittels des Hauptbremszylinders durch den Fahrzeugführer mit Druck beaufschlagt werden.

In der hydraulischen Rückfallbetriebsart wird bevorzugt eine Radschlupfregelung an den Hinterrädern mittels der elektromotorisch betätigbaren Radbremsen durchgeführt.

Bevorzugt umfasst die Bremsanlage ein elektrisch betätigbares, vorteilhafterweise stromlos geschlossenes, Simulatorventil, mittels welchem die Wirkung der Simulationseinrichtung zu- und abschaltbar ist. Das Simulatorventil ist besonders bevorzugt zwischen dem Hauptbremszylinder und der Simulationseinrichtung angeordnet.

Bevorzugt ist die Druckbereitstellungseinrichtung jeweils über ein elektrisch betätigbares, vorteilhafterweise stromlos geschlossenes, Zuschaltventil mit den ersten und mit den zweiten Radbremsen verbunden.

Die hydraulisch betätigbare (zweite) Radbremse eines Hinterrades und die elektromotorisch betätigbare Radbremse desselben Hinterrades ist bevorzugt als eine kombinierte Radbremse ausgeführt sein, in dem Sinne, dass ein verlagerbarer Bremskolben der kombinierten Radbremse mit einem Elektromotor der Parkbremsvorrichtung oder hydraulisch mittels der Betriebsbremsvorrichtung betätigt werden kann.

Alternativ ist es bevorzugt, dass die hydraulisch betätigbare (zweite) Radbremse und die elektromotorisch betätigbare Radbremse eines Hinterrades getrennt ausgeführt sind.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein erstes Ausführungsbeispiel einer erfindungsgemäßen Bremsanlage zur Durchführung eines erfindungsgemäßen Verfahrens,
- Fig. 2: ein zweites Ausführungsbeispiel einer erfindungsgemäßen Bremsanlage zur Durchführung eines erfindungsgemäßen Verfahrens,
- Fig. 3: ein erstes Ausführungsbeispiel eines Teils einer elektronischen Steuer- und Regeleinheit zur Ansteuerung einer erfindungsgemäßen Bremsanlage, und
- Fig. 4: ein zweites Ausführungsbeispiel eines Teils einer elektronischen Steuer- und Regeleinheit zur Ansteuerung einer erfindungsgemäßen Bremsanlage.

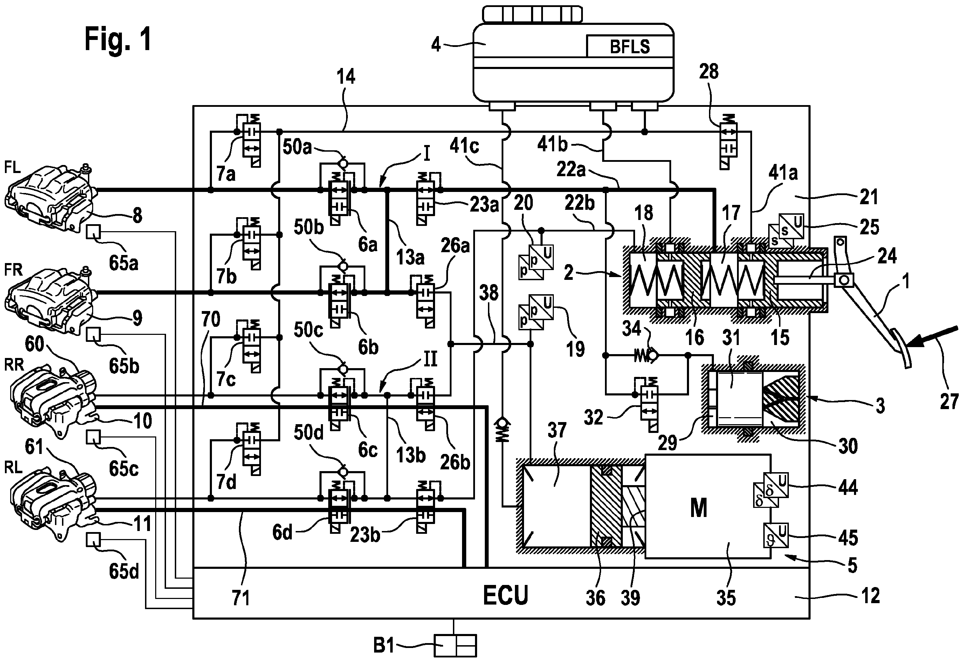

In Fig. 1 ist ein Ausführungsbeispiel einer erfindungsgemäßen Bremsanlage für ein Kraftfahrzeug mit zwei (nicht genauer dargestellten) Vorderrädern (vorne links: FL, vorne rechts: FR) und zwei Hinterrädern (hinten rechts: RR, hinten links: RL) dargestellt. Die Bremsanlage umfasst im Wesentlichen eine hydraulische Betriebsbremsvorrichtung mit hydraulisch betätigbaren Radbremsen 8, 9 an den Vorderrädern FL, FR und hydraulisch betätigbaren Radbremsen 10, 11 an den Hinterrädern RR, RL, eine Parkbremsvorrichtung (EPB: elektrische Parkbremse) mit elektromotorisch betätigbaren Radbremsen 60, 61 an den Hinterrädern RR, RL und eine elektronische Steuer- und Regeleinheit 12.

Zunächst wird die hydraulische Betriebsbremsvorrichtung näher erläutert. Sie umfasst einen mittels eines Betätigungs- bzw. Bremspedals 1 betätigbaren Hauptbremszylinder 2, eine mit dem Hauptbremszylinder 2 zusammen wirkende Simulationseinrichtung 3, einen dem Hauptbremszylinder 2 zugeordneten, unter Atmosphärendruck stehenden Druckmittelvorratsbehälter 4, eine elektrisch steuerbare Druckbereitstellungseinrichtung 5, welche durch eine Zylinder-Kolben-Anordnung mit einer hydraulischen Druckkammer 37 gebildet wird, deren Kolben 36 durch einen elektromechanischen Aktuator verschiebbar ist, eine elektrisch steuerbare Druckmodulationseinrichtung zum Einstellen radindividueller Bremsdrücke und je Rad des Fahrzeugs eine hydraulisch betätigbare Radbremse 8, 9, 10, 11.

Die hydraulisch betätigbaren Radbremsen 8, 9 der Vorderräder FL, FR werden im Folgenden auch als erste Radbremsen und die hydraulisch betätigbaren Radbremsen 10, 11 der Hinterräder als zweite Radbremsen bezeichnet. Die ersten Radbremsen 8, 9 sind einem ersten (hydraulischen) Bremskreis I zugeordnet, die zweiten Radbremsen 10, 11 sind einem zweiten (hydraulischen) Bremskreis II zugeordnet.

Die nicht näher bezeichnete Druckmodulationseinrichtung umfasst beispielsgemäß je hydraulisch betätigbarer Radbremse 8, 9, 10, 11 ein Einlassventil 6a-6d und ein Auslassventil 7a-7d, die paarweise über Mittenanschlüsse hydraulisch zusammengeschaltet und an die jeweilige Radbremse 8, 9, 10, 11 angeschlossen sind. Die Ausgangsanschlüsse der Auslassventile 7a-7d sind über eine Rücklaufleitung 14 mit dem Druckmittelvorratsbehälter 4 verbunden. Die Eingangsanschlüsse der Einlassventile 6a, 6b bzw. 6c, 6d eines Bremskreises I bzw. II sind über eine Bremskreisversorgungsleitung 13a bzw. 13b miteinander verbunden. Den Einlassventilen 6a-6d ist jeweils ein zu den Bremskreisversorgungsleitungen 13a, 13b hin öffnendes Rückschlagventil 50a-50d parallel geschaltet.

Der Hauptbremszylinder 2 weist in einem Gehäuse 21 zwei hintereinander angeordnete Kolben 15, 16 auf, die hydraulische Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei die Verbindungen durch eine Relativbewegung der Kolben 17, 18 im Gehäuse 21 absperrbar sind. In der Druckausgleichsleitung 41a ist zwischen Druckraum 17 und Druckmittelvorratsbehälter 4 ein stromlos offenes (SO-) Diagnoseventil 28 angeordnet. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung 27 mit der Translationsbewegung des ersten (Hauptbremszylinder-)Kolbens 15, dessen Betätigungsweg von einem, vorzugsweise redundant ausgeführten, Wegsensor 25 erfasst wird. Dadurch ist das entsprechende Kolbenwegsignal ein Maß für den Bremspedalbetätigungswinkel. Es repräsentiert einen Bremswunsch des Fahrzeugführers.

Jeder Druckraum 17 bzw. 18 steht andererseits mittels eines hydraulischen Leitungsabschnitts 22a bzw. 22b mit einer der Bremskreisversorgungsleitungen 13a bzw. 13b in Verbindung, wobei je ein Trennventil 23a bzw. 23b zwischen dem Druckraum 17 bzw. 18 und der Bremskreisversorgungsleitung 13a bzw. 13b angeordnet ist. Beispielsgemäß ist der erste Druckraum 17 des Hauptbremszylinders 2 dem Vorderachs-Bremskreis I zugeordnet und mit der Bremskreisversorgungsleitung 13a verbunden, und der zweite Druckraum 18 dem Hinterachs-Bremskreis II zugeordnet und mit der Bremskreisversorgungsleitung 13b verbunden. Trennventil 23a bzw. 23b ist als ein elektrisch betätigbares, vorzugsweise stromlos offenes (SO-), 2/2-Wegeventil ausgebildet. Durch die Trennventile 23a, 23b kann die hydraulische Verbindung zwischen den Druckräumen 17, 18 des Hauptbremszylinders 2 und den Bremskreisversorgungsleitungen 13a, 13b abgesperrt werden. Dies ist z.B. in einer sogenannten "Brake-by-wire"-Betriebsart der Bremsanlage gegeben.

Ein beispielsgemäß an den Leitungsabschnitt 22b angeschlossener Drucksensor 20 erfasst den Druck im Hauptbremszylinder 2.

Die Simulationseinrichtung 3 ist hydraulisch an den Hauptbremszylinder 2 ankoppelbar und besteht beispielsgemäß im Wesentlichen aus einer Simulatorkammer 29, einer Simulatorfederkammer 30 sowie einem die beiden Kammern 29, 30 voneinander trennenden Simulatorkolben 31. Der Simulatorkolben 31 stützt sich durch ein in der Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorventils 32 mit dem ersten Druckraum 17 des Hauptbremszylinders 2 verbindbar. Bei Vorgabe einer Pedalkraft und geöffnetem Simulatorventil 32 strömt Druckmittel vom Hauptbremszylinder-Druckraum 17 in die Simulatorkammer 29. Ein hydraulisch antiparallel zum Simulatorventil 32 angeordnetes Rückschlagventil 34 ermöglicht unabhängig vom Schaltzustand des Simulatorventils 32 ein weitgehend ungehindertes Zurückströmen des Druckmittels von der Simulatorkammer 29 zum Hauptbremszylinder-Druckraum 17. Andere Ausführungen und Anbindungen der Simulationseinrichtung an den Hauptbremszylinder 2 sind denkbar.

Die elektrisch steuerbare Druckbereitstellungseinrichtung 5 ist als eine hydraulische Zylinder-Kolben-Anordnung bzw. ein einkreisiger elektrohydraulischer Linearaktuator ausgebildet, deren/ dessen Kolben 36, welcher die Druckkammer 37 begrenzt, von einem schematisch angedeuteten Elektromotor 35 unter Zwischenschaltung eines ebenfalls schematisch dargestellten Rotations-Translationsgetriebes 39 betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor 45 zum Sensieren der Temperatur der Motorwicklung verwendet werden.

Der durch die Kraftwirkung des Kolbens 36 auf das in der Druckkammer 37 eingeschlossene Druckmittel erzeugte Aktuatordruck wird in eine Systemdruckleitung 38 eingespeist und mit einem vorzugsweise redundant ausgeführten Drucksensor 19 erfasst. Die Systemdruckleitung 38 ist mit den Bremskreisversorgungsleitungen 13a, 13b verbunden, wobei je ein Zuschaltventil 26a bzw. 26b zwischen der Druckkammer 37 und der Bremskreisversorgungsleitung 13a bzw. 13b angeordnet ist. Bei geöffneten Zuschaltventilen 26a, 26b gelangt das Druckmittel in die Radbremsen 8, 9, 10, 11 zu deren Betätigung. Dies ist z.B. in der "Brake-by-wire"-Betriebsart der Bremsanlage gegeben. Durch Vor- und Zurückschieben des Kolbens 36 kann so bei geöffneten Zuschaltventile 26a, 26b bei einer Normalbremsung in der "Brake-by-Wire"-Betriebsart ein Radbremsdruckaufbau und -abbau für alle Radbremsen 8, 9, 10, 11 durchgeführt werden.

Druckkammer 37 ist über eine Verbindungsleitung 41c, in welcher ein in Strömungsrichtung zur Druckbereitstellungseinrichtung 5 hin öffnendes Rückschlagventil 52 angeordnet ist, mit dem Druckmittelvorratsbehälter 4 verbunden. So ist ein Nachsaugen von Druckmittel in die Druckkammer 37 durch ein Zurückfahren des Kolbens 36 bei geschlossenen Zuschaltventilen 26a, 26b möglich.

Die Parkbremsvorrichtung umfasst elektromotorisch betätigbare Radbremsen 60, 61 an den Hinterrädern RR, RL des Fahrzeugs. Diese sind zusätzlich zu den hydraulisch betätigbaren Radbremsen 10, 11 der Hinterräder RR, RL vorgesehen. Jedoch können die elektromotorisch betätigbare Radbremsen 60, 61 und die hydraulisch betätigbaren Radbremsen in einem Bremssattel gemeinsam angeordnet bzw. ausgeführt sein, sogenannter Kombisattel. Jede der Radbremsen 60, 61 ist über eine elektrische Signalleitung 70, 71 mit der elektronischen Steuer- und Regeleinheit 12 verbunden, so dass die elektromotorisch betätigbaren Radbremsen 60, 61 von der Steuer- und Regeleinheit 12 angesteuert und betätigt werden können.

Die elektronische Steuer- und Regeleinheit 12 dient auch der Ansteuerung der elektrisch betätigbaren Komponenten der hydraulischen Betriebsbremsvorrichtung, insbesondere der Ventile 6a-6d, 7a-7d, 23a, 23b, 26a, 26b, 28, 32 und des Elektromotors 35 der Druckbereitstellungseinrichtung 5. Die Signale der Sensoren 19, 20, 25 und 44 werden ebenso der elektronische Steuer- und Regeleinheit 12 zugeführt und dort verarbeitet.

An jedem Rad FL, FR, RR, RL ist ein Raddrehzahlsensor 65a-65d vorgesehen, deren Raddrehzahlsignale der elektronischen Steuer- und Regeleinheit 12 zugeführt bzw. bereitgestellt werden.

Die Bremsanlage wird von einer elektrischen Energiequelle B1, z.B. einer Batterie oder einem Bordnetz mit elektrischer Energie versorgt.

Wie auch in Fig. 1 dargestellt ist (gekennzeichnet durch die dickeren Linien), werden in einer hydraulischen Rückfallbetriebsart der Bremsanlage ausschließlich die ersten Radbremsen 8, 9 der Vorderräder FL, FR mit dem Hauptbremszylinder 2 verbunden und mittels des Hauptbremszylinders 2 durch den Fahrzeugführer (durch Pedalbetätigung 27) mit Druck beaufschlagt, während die Hinterräder RR, RL ausschließlich mittels der elektromotorisch betätigbaren Radbremsen 60, 61 gebremst werden.

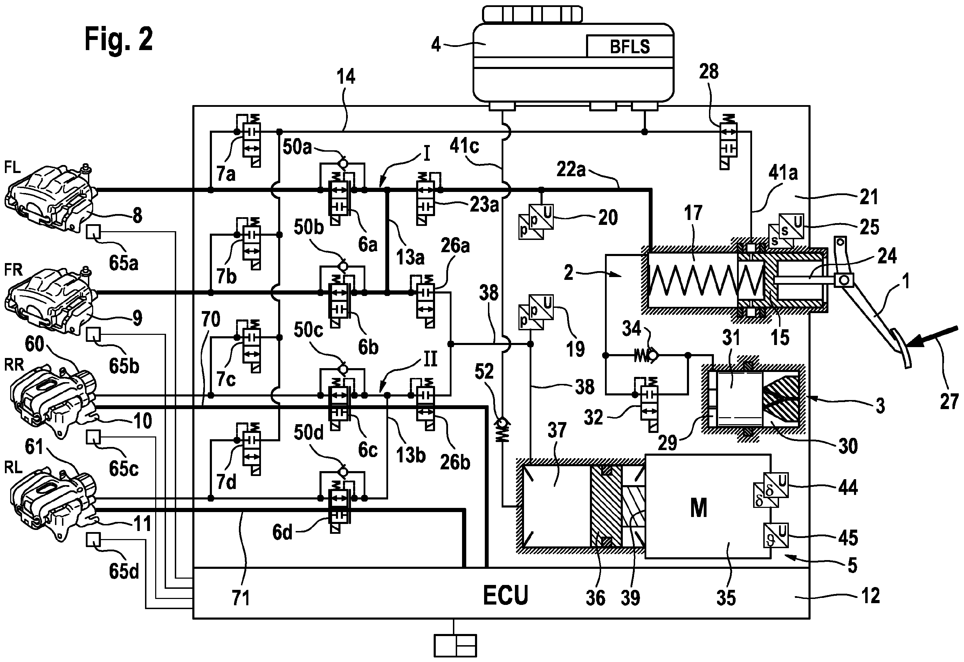

In Fig. 2 ist ein anderes Ausführungsbeispiel einer erfindungsgemäßen Bremsanlage für ein Kraftfahrzeug mit zwei (nicht genauer dargestellten) Vorderrädern (vorne links: FL, vorne rechts: FR) und zwei Hinterrädern (hinten rechts: RR, hinten links: RL) dargestellt. Die Bremsanlage umfasst im Wesentlichen eine hydraulische Betriebsbremsvorrichtung mit hydraulisch betätigbaren Radbremsen 8, 9 an den Vorderrädern FL, FR und hydraulisch betätigbaren Radbremsen 10, 11 an den Hinterrädern RR, RL, eine Parkbremsvorrichtung mit elektromotorisch betätigbaren Radbremsen 60, 61 an den Hinterrädern RR, RL und eine elektronische Steuer- und Regeleinheit 12.

Im Unterschied zum Ausführungsbeispiel der Fig. 1 ist der Hauptbremszylinder 2 einkreisig, mit nur einem (ersten) Kolben 15 und nur einem (ersten) Druckraum 17 ausgeführt. Druckraum 17 bzw. Hauptbremszylinder 2 steht mittels des hydraulischen Leitungsabschnitts 22a mit der Bremskreisversorgungsleitung 13a des Vorderachs-Bremskreises I in Verbindung, wobei das Trennventil 23a zwischen dem Druckraum 17 und der Bremskreisversorgungsleitung 13a angeordnet ist. Drucksensor 20 ist beispielsgemäß an den Leitungsabschnitt 22a angeschlossen.

Eine hydraulische Verbindung des Druckraums 17 bzw. Hauptbremszylinders 2 mit den Hinterradbremsen 10, 11 (bzw. der Bremskreisversorgungsleitung 13b) ist nur über das Trennventil 23a, das Zuschaltventil 26a und das Zuschaltventil 26b möglich.

In der Rückfallbetriebsart werden nur die Vorderradbremsen 8, 9 durch den Fahrer (die Pedalbetätigung 27) mit Druckmittel aus dem Hauptbremszylinder 2 beaufschlagt. Die Hinterräder RR, RL werden nur mittels der elektromotorisch betätigbaren Radbremsen 60, 61 sgebremst. Dies ist in Fig. 2 durch die dickeren Linien gekennzeichnet (hydraulisch: Leitungen 22a, 13a und zu den Radbremsen 8, 9, elektrisch: Ansteuerleitungen 70, 71).

Die Bremsanlage der Fig. 2 umfasst keinen hydraulischen Leitungsabschnitts 22b von dem Hauptbremszylinder 2 zu der Bremskreisversorgungsleitung 13b des Hinterachs-Bremskreises und entsprechend auch kein Trennventil 23b wie die Bremsablage der Fig. 1.

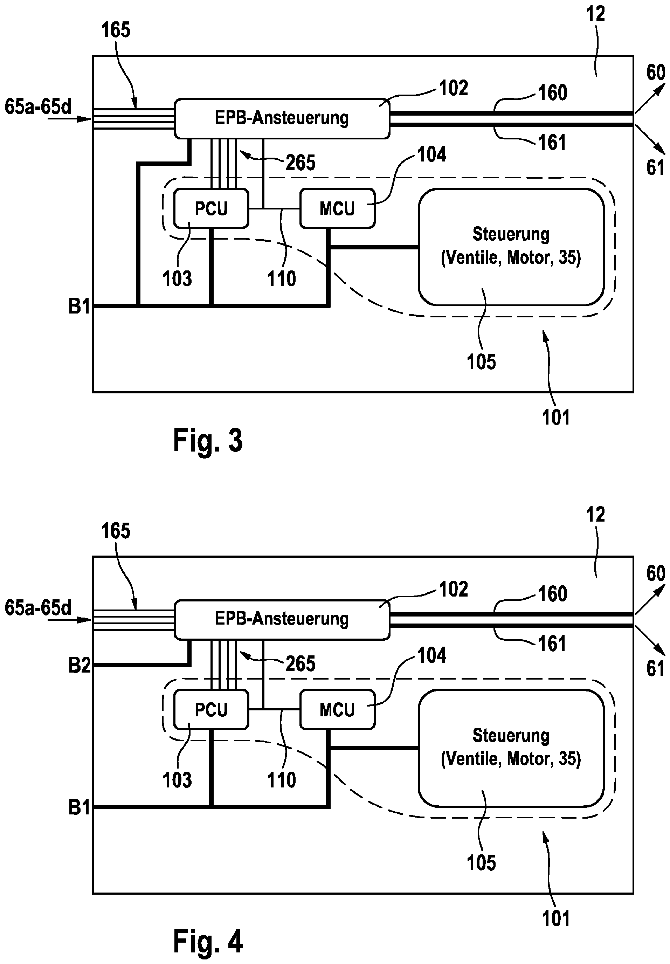

Fig. 3 zeigt stark schematisch einen Ausschnitt einer ersten beispielsgemäßen elektronischen Steuer- und Regeleinheit 12 zur Ansteuerung einer erfindungsgemäßen Bremsanlage.

Die elektronische Steuer- und Regeleinheit 12 umfasst ein erstes elektrisches und/oder elektronisches Mittel 101 zur Ansteuerung der elektrisch betätigbaren Komponenten der hydraulischen Betriebsbremsvorrichtung und ein zweites, von dem ersten Mittel getrennt ausgeführtes, elektrisches und/oder elektronisches Mittel 102 zur Ansteuerung der Parkbremsvorrichtung, insbesondere der elektromotorisch betätigbaren Radbremsen 60, 61.

Das erste Mittel 101 der elektronische Steuer- und Regeleinheit 12 umfasst beispielsgemäß eine Leistungssteuereinheit 103 (PCU: Power Control Unit), einen Mikrocontroller 104 (MCU: Microcontroller Unit) und eine Steuerelektronik 105.

Steuerelektronik 105 umfasst beispielsgemäß eine Elektronik zur Ansteuerung der Ventile der hydraulischen Betriebsbremsvorrichtung (z.B. der Ventile 6a-6d, 7a-7d, 23a, 23b, 26a, 26b, 28, 34). Weiterhin umfasst Steuerelektronik 105 die elektrischen Komponenten zur Ansteuerung des Elektromotors 35 der Druckbereitstellungseinrichtung 5.

Dem zweiten Mittel 102 zur Ansteuerung der Parkbremsvorrichtung werden die Signale der an den Vorder- und Hinterrädern angeordneten Raddrehzahlsensoren 65a-65d zugeführt (gekennzeichnet durch die Linien 165 in Fig. 3 und 4).

Zur Ansteuerung der Radbremsen 60, 61 ist das zweite Mittel 102 mit diesen durch Ansteuerleitungen 160, 161 verbunden.

Die Signale der Raddrehzahlsensoren 65a-65d werden von dem weiten Mittel 102 zur Ansteuerung der Parkbremsvorrichtung an Leistungssteuereinheit 103 weitergeleitet (gekennzeichnet durch die Linien 265 in Fig. 3 und 4).

Vorteilhafterweise ist das zweite Mittel 102 zusätzlich zur Ansteuerung der Einlassventile 6c, 6d der zweiten Radbremsen 10, 11 ausgebildet (entsprechende Ansteuerleitung sind in Fig. 3, 4 nicht dargestellt). Mittel 102 umfasst z.B. eine Leistungselektronik zur Ansteuerung dieser Ventile 6c, 6d. Dis ist insbesondere für eine Bremsanlage wie in Fig. 1 vorteilhaft, bei welcher der Hauptbremszylinder 2 im stromlosen Zustand der hydraulischen Betriebsbremsvorrichtung mit den ersten und zweiten Radbremsen 8-11 verbunden ist.

Das erste Mittel 101 und das zweite Mittel 102 werden durch eine elektrische Energiequelle B1 mit elektrischer Energie versorgt.

Fig. 4 zeigt stark schematisch einen Ausschnitt einer zweiten beispielsgemäßen elektronischen Steuer- und Regeleinheit 12 zur Ansteuerung einer erfindungsgemäßen Bremsanlage.

Die elektronischen Steuer- und Regeleinheit 12 der Fig. 4 entspricht weitgehend der elektronischen Steuer- und Regeleinheit 12 der Fig. 3.

So umfasst die elektronische Steuer- und Regeleinheit 12 ein erstes elektrisches und/oder elektronisches Mittel 101 zur Ansteuerung der elektrisch betätigbaren Komponenten der hydraulischen Betriebsbremsvorrichtung und ein zweites, von dem ersten Mittel getrennt ausgeführtes, elektrisches und/oder elektronisches Mittel 102 zur Ansteuerung der Parkbremsvorrichtung, insbesondere der elektromotorisch betätigbaren Radbremsen 60, 61. Weiterhin werden dem zweiten Mittel 102 zur Ansteuerung der Parkbremsvorrichtung die Signale der an den Vorder- und Hinterrädern angeordneten Raddrehzahlsensoren 65a-65d zugeführt (Linien 165).

Im Unterschied zu Fig. 3 sind bei Fig. 4 eine erste elektrische Energiequelle B1 und eine von der ersten Energiequelle B1 unabhängige, zweite elektrische Energiequelle B2 vorgesehen. Dabei wird das erste Mittel 101 durch die erste Energiequelle B1 und das zweite Mittel 102 durch die zweite Energiequelle B2 mit elektrischer Energie versorgt. Die zusätzliche, unabhängige Energiequelle B2 ist also zur Betätigung der Parkbremsvorrichtung vorgesehen. So kann auch bei Ausfall der ersten Energiequelle B1 und damit dem Ausfall der elektrischen Ansteuerung der hydraulischen Betriebsbremsvorrichtung weiterhin eine Bremsung mittels der Parkbremsvorrichtung über Mittel 102 durchgeführt werden.

Die Erfindung bietet den Vorteil einer verbesserten Funktion / Ausführung der Rückfallebene einer "Brake-by-wire"-Bremsanlage nach einem schwerwiegenden elektronischen Erstfehler im Bereich der elektrisch betätigbaren Druckbereitstellungseinrichtung 5 der hydraulischen Betriebsbremsvorrichtung, welche die Bremswirkung und die Fahrzeug-Stabilität verbessert bzw. instabil wirkende Bremsungen vermeidet. Hierzu werden die hydraulischen Radbremsen 8, 9 nur an der Vorderrädern FL, FR durch den Fahrer bedient und unter Zuhilfenahme der Parkbremsvorrichtung bzw. der Aktuatoren (Elektromotoren) der elektromotorisch betätigbaren Radbremsen 60, 61 an den Hinterrädern RR, RL wird eine entsprechende Bremswirkung eingestellt.

Vorzugsweise wird das Bremsmoment an der Hinterachse (Hinterräder RR, RL) im günstigen Verhältnis zu dem Bremsmoment der Hinterachse eingestellt. Das kann z.B. durch eine Rad-Drehzahl-Regelung oder Rad-Schlupf-Regelung erfolgen.

In einem Ausführungsbeispiel (siehe z.B. Fig. 2) der Bremsanlage ist der hydraulische Schaltplan so ausgeführt, dass nach Ausfall der by-Wire-Bremsfunktion (d.h. in der hydraulischen Rückfallbetriebsart der Bremsanlage, z.B. bei Ausfall der Druckerzeugung durch Druckbereitstellungseinrichtung 5) der Fahrer durch den Hauptbremszylinder 2 nur die Radbremsen 8, 9 der Vorderachse bedienen kann (im stromlosen Zustand der hydraulischen Betriebsbremsvorrichtung). Die elektronische Steuer- und Regeleinheit 12 ist so ausgeführt, dass nach Ausfall der by-Wire-Bremsfunktion ein Teil der Elektronik, z.B. das zweite Mittel 102, verfügbar bleibt, welcher die EPB-Aktuatoren (elektromotorischen Radbremsen 60, 61) bedienen kann.

Vorzugweise kann der verfügbare Teil der Elektronik (das zweite Mittel 102) die Signale der Raddrehzahlsensoren 65a-65d einlesen und vorzugsweise eine Radschlupfregelung der Hinterachsräder RR, RL derart ausführen, dass die EPB-Aktuatoren geeignet auf und zu gespannt werden.

In einem weiteren Ausführungsbeispiel (siehe z.B. Fig. 1) der Bremsanlage ist der hydraulische Schaltplan so ausgeführt, dass nach Ausfall der by-Wire-Bremsfunktion (d.h. in der hydraulischen Rückfallbetriebsart der Bremsanlage) der Fahrer durch den Hauptbremszylinder 2 die Radbremsen 8-11 der Vorderachse und der Hinterachse grundsätzlich bedienen könnte (im stromlosen Zustand der hydraulischen Betriebsbremsvorrichtung). In der hydraulischen Rückfallbetriebsart sind jedoch die zweiten Radbremsen 10, 11 (hydraulische Radbremsen 10, 11 der Hinterräder) nicht mit dem Hauptbremszylinder (2) verbunden sind und mittels des Hauptbremszylinders (2) durch den Fahrzeugführer mit Druck beaufschlagt werden

Die elektronische Steuer- und Regeleinheit 12 ist bevorzugt dann derart ausgeführt, dass in der hydraulischen Rückfallbetriebsart die Einlassventile 6c, 6d der Hinterräder RR, RL von dem Teil der Elektronik, welcher die EPB-Aktuatoren (elektromotorischen Radbremsen 60, 61) bedienen kann, z.B. dem zweiten Mittel, betätigt werden können.

Die Regelung wird dann in der hydraulischen Rückfallbetriebsart derart ausgeführt, dass bei einer Bremsbetätigung 27 durch den Fahrer die Einlassventile 6c, 6d der Hinterradbremsen 10, 11 geschlossen werden. Der Fahrer bedient dann nur die hydraulischen Vorderradbremsen 8, 9. Die Hinterräder RR, RL werden nur durch die elektromotorischen Radbremsen 60, 61 gebremst.

Dieses Ausführungsbeispiel hat den zusätzlichen Vorteil, dass im Falle eines vollständigen Ausfalls der elektrischen Energieversorgung der Bremsanlage das Fahrzeug dennoch in einer zweiten hydraulischen Rückfallbetriebsart mit allen hydraulischen Radbremsen 8-11 verzögert werden kann. Jedoch dann mit dem Nachteil eines längeren Pedalweges.

Bevorzugt wird nach einem Doppelfehler oder einem vorliegenden schlafenden Fehler mit der Folge, dass das Zuspannen der Vorderradbremsen 8, 9 nach Fahrerbremsbetätigung 27 ausbleibt, der Betriebsmodus der Rückfallebene (Betätigung der Parkbremsvorrichtung) derart geändert, dass die elektromotorisch betätigbaren Radbremsen 60, 61 vergleichbar der Aktuator dynamische Bremsfunktion (ADBF) betätigt werden.

## Patentansprüche

1. Bremsanlage eines Kraftfahrzeugs mit Vorderrädern (FL, FR) und Hinterrädern (RR, RL) umfassend
• eine hydraulische Betriebsbremsvorrichtung mit hydraulisch betätigbaren ersten Radbremsen (8, 9) an den Vorderrädern und hydraulisch betätigbaren zweiten Radbremsen (10, 11) an den Hinterrädern,
einem elektrisch betätigbaren, insbesondere stromlos offenen, Einlassventil (6a-6d) je hydraulisch betätigbarer Radbremse (8, 9, 10, 11),
einem Bremspedal-betätigbaren Hauptbremszylinder (2), welcher über ein elektrisch betätigbares, insbesondere stromlos offenes, erstes Trennventil (23a) mit den ersten Radbremsen (8, 9) verbunden ist,
einer mit dem Hauptbremszylinder (2) hydraulisch verbundenen Simulationseinrichtung (3), welche einem Fahrzeugführer in einer "Brake-by-wire"-Betriebsart ein angenehmes Bremspedalgefühl vermittelt,
einer elektrisch betätigbaren Druckbereitstellungseinrichtung (5) zur Betätigung der ersten und zweiten Radbremsen in der "Brake-by-wire"-Betriebsart, wobei die Druckbereitstellungseinrichtung mit den ersten und den zweiten Radbremsen (8, 9, 10, 11) verbunden ist,
• eine Parkbremsvorrichtung (EPB) mit elektromotorisch betätigbaren Radbremsen (60, 61) an den Hinterrädern (RR, RL), und
• eine elektronische Steuer- und Regeleinheit (12),
**dadurch gekennzeichnet, dass** in einer hydraulischen Rückfallbetriebsart der Bremsanlage bei einer Bremspedalbetätigung (27) durch einen Fahrzeugführer ausschließlich die ersten Radbremsen (8, 9) mit dem Hauptbremszylinder (2) verbunden sind und mittels des Hauptbremszylinders (2) durch den Fahrzeugführer mit Druck beaufschlagt werden, während die Hinterräder (RR, RL) ausschließlich mittels der elektromotorisch betätigbaren Radbremsen gebremst werden, dazu ist im stromlosen Zustand der hydraulischen Betriebsbremsvorrichtung der Hauptbremszylinder lediglich mit den hydraulisch betätigbaren ersten Radbremsen an den Vorderrädern verbunden oder der Hauptbremszylinder ist im stromlosen Zustand der hydraulischen Betriebsbremsvorrichtung mit den hydraulisch betätigbaren ersten Radbremsen und mit den hydraulisch betätigbaren zweiten Radbremsen an den Hinterrädern verbunden, wobei die Einlassventile der hydraulischen Hinterradbremsen geschlossen werden, so dass ausschließlich die hydraulischen Vorderradbremsen mit dem Hauptbremszylinder verbunden sind und mittels des Hauptbremszylinders durch den Fahrzeugführer mit Druck beaufschlagt werden.

2. Bremsanlage nach Anspruch 1, **dadurch gekennzeichnet, dass** die elektronische Steuer- und Regeleinheit (12) zumindest ein erstes elektrisches und/oder elektronisches Mittel (101) zur Ansteuerung der elektrisch betätigbaren Komponenten der hydraulischen Betriebsbremsvorrichtung und zumindest ein zweites, von dem ersten Mittel getrennt ausgeführtes, elektrisches und/oder elektronisches Mittel (102) zur Ansteuerung der elektromotorisch betätigbaren Radbremsen (60, 61) umfasst.

3. Bremsanlage nach Anspruch 2, **dadurch gekennzeichnet, dass** dem zweiten Mittel (102) Signale von an den Vorder- und Hinterrädern angeordneten Raddrehzahlsensoren (65a-65d) zugeführt werden.

4. Bremsanlage nach Anspruch 2 oder 3, **dadurch gekennzeichnet, dass** das zweite elektrische und/oder elektronische Mittel (102) zur Ausführung einer Radschlupfregelung an den Hinterrädern (RR, RL) mittels der elektromotorisch betätigbaren Radbremsen (60, 61) ausgebildet ist.

5. Bremsanlage nach einem der Ansprüche 2 bis 4, **dadurch gekennzeichnet, dass** das erste Mittel (101) und das zweite Mittel (102) durch eine erste elektrische Energiequelle (B1) mit elektrischer Energie versorgt werden.

6. Bremsanlage nach einem der Ansprüche 2 bis 4, **dadurch gekennzeichnet, dass** das erste Mittel (101) durch eine erste elektrische Energiequelle (B1) mit elektrischer Energie versorgt wird, und das zweite Mittel (102) durch eine zweite, unabhängige elektrische Energiequelle (B2) mit elektrischer Energie versorgt wird.

7. Bremsanlage nach einem der Ansprüche 2 bis 6, **dadurch gekennzeichnet, dass** das zweite Mittel (102) zusätzlich zur Ansteuerung der Einlassventile (6c, 6d) der zweiten Radbremsen (10, 11) ausgebildet ist.

8. Verfahren zum Betrieb einer Bremsanlage eines Kraftfahrzeugs mit Vorderrädern (FL, FR) und Hinterrädern (RR, RL) umfassend
• eine hydraulische Betriebsbremsvorrichtung mit hydraulisch betätigbaren ersten Radbremsen (8, 9) an den Vorderrädern und hydraulisch betätigbaren zweiten Radbremsen (10, 11) an den Hinterrädern,
einem elektrisch betätigbaren, insbesondere stromlos offenen, Einlassventil (6a-6d) je hydraulisch betätigbarer Radbremse (8, 9, 10, 11),
einem Bremspedal-betätigbaren Hauptbremszylinder (2), welcher zumindest mit den ersten Radbremsen (8, 9) trennbar verbunden ist,
einer mit dem Hauptbremszylinder (2) hydraulisch verbundenen Simulationseinrichtung (3), welche einem Fahrzeugführer in einer "Brake-by-wire"-Betriebsart ein angenehmes Bremspedalgefühl,
einer elektrisch betätigbaren Druckbereitstellungseinrichtung (5) zur Betätigung der ersten und zweiten Radbremsen in der "Brake-by-wire"-Betriebsart, wobei die Druckbereitstellungseinrichtung mit den ersten und den zweiten Radbremsen (8, 9, 10, 11), insbesondere trennbar, verbunden ist,
• eine Parkbremsvorrichtung mit elektromotorisch betätigbaren Radbremsen (60, 61) an den Hinterrädern (RR, RL) , und
• eine elektronische Steuer- und Regeleinheit (12), **dadurch gekennzeichnet, dass** in einer hydraulischen Rückfallbetriebsart der Bremsanlage bei einer Bremspedalbetätigung (27) durch einen Fahrzeugführer ausschließlich die ersten Radbremsen (8, 9) mit dem Hauptbremszylinder (2) verbunden sind und mittels des Hauptbremszylinders (2) durch den Fahrzeugführer mit Druck beaufschlagt werden, während die Hinterräder (RR, RL) ausschließlich mittels der elektromotorisch betätigbaren Radbremsen gebremst werden, wobei im stromlosen Zustand der hydraulischen Betriebsbremsvorrichtung der Hauptbremszylinder lediglich mit den hydraulisch betätigbaren ersten Radbremsen an den Vorderrädern verbunden ist oder der Hauptbremszylinder im stromlosen Zustand der hydraulischen Betriebsbremsvorrichtung mit den hydraulisch betätigbaren ersten Radbremsen und mit den hydraulisch betätigbaren zweiten Radbremsen an den Hinterrädern verbunden ist, wobei die Einlassventile der hydraulischen Hinterradbremsen geschlossen werden, so dass ausschließlich die hydraulischen Vorderradbremsen mit dem Hauptbremszylinder verbunden sind und mittels des Hauptbremszylinders durch den Fahrzeugführer mit Druck beaufschlagt werden.

9. Verfahren nach Anspruch 8 , **dadurch gekennzeichnet, dass** in der hydraulischen Rückfallbetriebsart eine Radschlupfregelung an den Hinterrädern (RR, RL) mittels der elektromotorisch betätigbaren Radbremsen (60, 61) durchgeführt wird.

## Claims

1. Brake system of a motor vehicle having front wheels (FL, FR) and rear wheels (RR, RL), comprising
• a hydraulic service brake device having hydraulically actuatable first wheel brakes (8, 9) at the front wheels and hydraulically actuatable second wheel brakes (10, 11) at the rear wheels,
an electrically actuatable, in particular normally open, inlet valve (6a-6d) for each hydraulically actuatable wheel brake (8, 9, 10, 11),
a brake-pedal-actuatable master brake cylinder (2), which is connected to the first wheel brakes (8, 9) via an electrically actuatable, in particular normally open, first isolating valve (23a),
a simulation device (3), which is connected hydraulically to the master brake cylinder (2) and provides a pleasant brake pedal feel for a vehicle driver in a "brake-by-wire" operating mode,
an electrically actuatable pressure-providing device (5) for actuating the first and second wheel brakes in the "brake-by-wire" operating mode, wherein the pressure-providing device is connected to the first and the second wheel brakes (8, 9, 10, 11),
• a parking brake device (EPB) having electric-motor-actuatable wheel brakes (60, 61) at the rear wheels (RR, RL), and
• an electronic open-loop and closed-loop control unit (12),
**characterized in that** in a hydraulic fall back operating mode of the brake system, in the case of a brake pedal actuation (27) by a vehicle driver, exclusively the first wheel brakes (8, 9) are connected to the master brake cylinder (2) and supplied with pressure by the vehicle driver by means of the master brake cylinder (2), while the rear wheels (RR, RL) are braked exclusively by means of the electric-motor-actuatable wheel brakes; to this end the master brake cylinder in the normal state of the hydraulic service brake device is connected only to the hydraulically actuatable first wheel brakes at the front wheels, or the master brake cylinder in the normal state of the hydraulic service brake device is connected to the hydraulically actuatable first wheel brakes and to the hydraulically actuatable second wheel brakes at the rear wheels, wherein the inlet valves of the hydraulic rear wheel brakes are closed so that exclusively the hydraulic front wheel brakes are connected to the master brake cylinder and supplied with pressure by the vehicle driver by means of the master brake cylinder.

2. Brake system according to Claim 1, **characterized in that** the electronic open-loop and closed-loop control unit (12) comprises at least one first electric and/or electronic means (101) for controlling the electrically actuatable components of the hydraulic service brake device and at least one second electric and/or electronic means (102), embodied separately from the first means, for controlling the electric-motor-actuatable wheel brakes (60, 61).

3. Brake system according to Claim 2, **characterized in that** signals from wheel speed sensors (65a-65d) arranged at the front and rear wheels are fed to the second means (102).

4. Brake system according to Claim 2 or 3, **characterized in that** the second electric and/or electronic means (102) is designed for carrying out wheel slip control at the rear wheels (RR, RL) by means of the electric-motor-actuatable wheel brakes (60, 61).

5. Brake system according to one of Claims 2 to 4, **characterized in that** the first means (101) and the second means (102) are supplied with electric energy by a first electric energy source (B1).

6. Brake system according to one of Claims 2 to 4, **characterized in that** the first means (101) is supplied with electric energy by a first electric energy source (B1), and the second means (102) is supplied with electric energy by a second, independent electric energy source (B2).

7. Brake system according to one of Claims 2 to 6, **characterized in that** the second means (102) is additionally designed to control the inlet valves (6c, 6d) of the second wheel brakes (10, 11).

8. Method for operating a brake system of a motor vehicle having front wheels (FL, FR) and rear wheels (RR, RL), comprising
• a hydraulic service brake device having hydraulically actuatable first wheel brakes (8, 9) at the front wheels and hydraulically actuatable second wheel brakes (10, 11) at the rear wheels,
an electrically actuatable, in particular normally open, inlet valve (6a-6d) for each hydraulically actuatable wheel brake (8, 9, 10, 11),
a brake-pedal-actuatable master brake cylinder (2), which is connected separably at least to the first wheel brakes (8, 9),
a simulation device (3), which is connected hydraulically to the master brake cylinder (2) and provides a pleasant brake pedal feel for a vehicle driver in a "brake-by-wire" operating mode,
an electrically actuatable pressure-providing device (5) for actuating the first and second wheel brakes in the "brake-by-wire" operating mode, wherein the pressure-providing device is connected, in particular separably, to the first and the second wheel brakes (8, 9, 10, 11),
• a parking brake device having electric-motor-actuatable wheel brakes (60, 61) at the rear wheels (RR, RL), and
• an electronic open-loop and closed-loop control unit (12),
**characterized in that** in a hydraulic fall back operating mode of the brake system, in the case of a brake pedal actuation (27) by a vehicle driver, exclusively the first wheel brakes (8, 9) are connected to the master brake cylinder (2) and supplied with pressure by the vehicle driver by means of the master brake cylinder (2), while the rear wheels (RR, RL) are braked exclusively by means of the electric-motor-actuatable wheel brakes, wherein the master brake cylinder in the normal state of the hydraulic service brake device is connected only to the hydraulically actuatable first wheel brakes at the front wheels, or the master brake cylinder in the normal state of the hydraulic service brake device is connected to the hydraulically actuatable first wheel brakes and to the hydraulically actuatable second wheel brakes at the rear wheels, wherein the inlet valves of the hydraulic rear wheel brakes are closed so that exclusively the hydraulic front wheel brakes are connected to the master brake cylinder and supplied with pressure by the vehicle driver by means of the master brake cylinder.

9. Method according to Claim 8, **characterized in that** wheel slip control is carried out at the rear wheels (RR, RL) by means of the electric-motor-actuatable wheel brakes (60, 61) in the hydraulic fall back operating mode.

## Revendications

1. Système de freinage d'un véhicule automobile doté de roues avant (FL, FR) et de roues arrière (RR, RL) comprenant
• un dispositif de frein de service hydraulique doté de premiers freins de roue (8, 9) pouvant être actionnés hydrauliquement sur les roues avant et de deuxièmes freins de roue (10, 11) pouvant être actionnés hydrauliquement sur les roues arrière,
d'une soupape d'admission (6a-6d) pouvant être actionnée électriquement, en particulier ouverte sans courant, pour chaque frein de roue (8, 9, 10, 11) pouvant être actionné hydrauliquement,
d'un maître-cylindre de frein (2) pouvant être actionné par la pédale de frein, lequel est relié aux premiers freins de roue (8, 9) par le biais d'une première soupape de séparation (23a) pouvant être actionnée électriquement, en particulier ouverte sans courant,
d'un dispositif de simulation (3) relié hydrauliquement au maître-cylindre de frein (2), lequel dispositif de simulation communique à un conducteur du véhicule une sensation de pédale de frein agréable dans un mode de fonctionnement de freinage à commande électronique (« brake-by-wire »),
d'un dispositif de fourniture de pression (5) pouvant être actionné électriquement pour l'actionnement des premiers et deuxièmes freins de roue dans le mode de fonctionnement de freinage à commande électronique, le dispositif de fourniture de pression étant relié aux premiers et aux deuxièmes freins de roue (8, 9, 10, 11),
• d'un dispositif de frein de stationnement (EPB) doté de freins de roue (60, 61) pouvant être actionnés de manière électromotorisée sur les roues arrière (RR, RL), et
• d'une unité de commande et de régulation électronique (12),
**caractérisé en ce que**, dans un mode de fonctionnement de secours hydraulique du système de freinage en cas d'actionnement de la pédale de frein (27) par un conducteur du véhicule, exclusivement les premiers freins de roue (8, 9) sont reliés au maître-cylindre de frein (2) et sont soumis à une pression par le conducteur du véhicule au moyen du maître-cylindre de frein (2), tandis que les roues arrière (RR, RL) sont freinées exclusivement au moyen des freins de roue pouvant être actionnés de manière électromotorisée, à cet effet, dans l'état sans courant du dispositif de frein de service hydraulique, le maître-cylindre de frein est relié seulement aux premiers freins de roue pouvant être actionnés hydrauliquement sur les roues avant ou le maître-cylindre de frein est, dans l'état sans courant du dispositif de frein de service hydraulique, relié aux premiers freins de roue pouvant être actionnés hydrauliquement et aux deuxièmes freins de roue pouvant être actionnés hydrauliquement sur les roues arrière, les soupapes d'admission des freins de roue arrière hydrauliques étant fermées de telle sorte qu'exclusivement les freins de roue avant hydrauliques sont reliés au maître-cylindre de frein et sont soumis à une pression par le conducteur du véhicule au moyen du maître-cylindre de frein.

2. Système de freinage selon la revendication 1, **caractérisé en ce que** l'unité de commande et de régulation électronique (12) comprend au moins un premier moyen électrique et/ou électronique (101) pour la commande des composants pouvant être actionnés électriquement du dispositif de frein de service hydraulique et au moins un deuxième moyen électrique et/ou électronique (102), réalisé séparément du premier moyen, pour la commande des freins de roue (60, 61) pouvant être actionnés de manière électromotorisée.

3. Système de freinage selon la revendication 2, **caractérisé en ce que** des signaux provenant de capteurs de vitesse de rotation de roue (65a-65d) disposés sur les roues avant et arrière sont acheminés au deuxième moyen (102).

4. Système de freinage selon la revendication 2 ou 3, **caractérisé en ce que** le deuxième moyen électrique et/ou électronique (102) est réalisé pour effectuer une régulation de patinage de roue au niveau des roues arrière (RR, RL) au moyen des freins de roue (60, 61) pouvant être actionnés de manière électromotorisée.

5. Système de freinage selon l'une des revendications 2 à 4, **caractérisé en ce que** le premier moyen (101) et le deuxième moyen (102) sont alimentés en énergie électrique par le biais d'une première source d'énergie électrique (B1).

6. Système de freinage selon l'une des revendications 2 à 4, **caractérisé en ce que** le premier moyen (101) est alimenté en énergie électrique par le biais d'une première source d'énergie électrique (B1), et le deuxième moyen (102) est alimenté en énergie électrique par le biais d'une deuxième source d'énergie électrique (B2) indépendante.

7. Système de freinage selon l'une des revendications 2 à 6, **caractérisé en ce que** le deuxième moyen (102) est réalisé en outre pour la commande des soupapes d'admission (6c, 6d) des deuxièmes freins de roue (10, 11).

8. Procédé de fonctionnement d'un système de freinage d'un véhicule automobile doté de roues avant (FL, FR) et de roues arrière (RR, RL) comprenant
• un dispositif de frein de service hydraulique doté de premiers freins de roue (8, 9) pouvant être actionnés hydrauliquement sur les roues avant et de deuxièmes freins de roue (10, 11) pouvant être actionnés hydrauliquement sur les roues arrière,
d'une soupape d'admission (6a-6d) pouvant être actionnée électriquement, en particulier ouverte sans courant, pour chaque frein de roue (8, 9, 10, 11) pouvant être actionné hydrauliquement,
d'un maître-cylindre de frein (2) pouvant être actionné par la pédale de frein, lequel est relié au moins aux premiers freins de roue (8, 9) de manière séparable, d'un dispositif de simulation (3) relié hydrauliquement au maître-cylindre de frein (2), lequel dispositif de simulation communique à un conducteur du véhicule une sensation de pédale de frein agréable dans un mode de fonctionnement de freinage à commande électronique (« brake-by-wire »),
d'un dispositif de fourniture de pression (5) pouvant être actionné électriquement pour l'actionnement des premiers et deuxièmes freins de roue dans le mode de fonctionnement de freinage à commande électronique, le dispositif de fourniture de pression étant relié aux premiers et aux deuxièmes freins de roue (8, 9, 10, 11), en particulier de manière séparable,
• d'un dispositif de frein de stationnement doté de freins de roue (60, 61 ) pouvant être actionnés de manière électromotorisée sur les roues arrière (RR, RL), et
• d'une unité de commande et de régulation électronique (12),
**caractérisé en ce que**, dans un mode de fonctionnement de secours hydraulique du système de freinage en cas d'actionnement de la pédale de frein (27) par un conducteur du véhicule, exclusivement les premiers freins de roue (8, 9) sont reliés au maître-cylindre de frein (2) et sont soumis à une pression par le conducteur du véhicule au moyen du maître-cylindre de frein (2), tandis que les roues arrière (RR, RL) sont freinées exclusivement au moyen des freins de roue pouvant être actionnés de manière électromotorisée, dans l'état sans courant du dispositif de frein de service hydraulique, le maître-cylindre de frein étant relié seulement aux premiers freins de roue pouvant être actionnés hydrauliquement sur les roues avant ou le maître-cylindre de frein étant, dans l'état sans courant du dispositif de frein de service hydraulique, relié aux premiers freins de roue pouvant être actionnés hydrauliquement et aux deuxièmes freins de roue pouvant être actionnés hydrauliquement sur les roues arrière, les soupapes d'admission des freins de roue arrière hydrauliques étant fermées de telle sorte qu'exclusivement les freins de roue avant hydrauliques sont reliés au maître-cylindre de frein et peuvent être soumis à une pression par le conducteur du véhicule au moyen du maître-cylindre de frein.

9. Procédé selon la revendication 8, **caractérisé en ce que**, dans le mode de fonctionnement de secours hydraulique, une régulation de patinage de roue au niveau des roues arrière (RR, RL) est effectuée au moyen des freins de roue (60, 61) pouvant être actionnés de manière électromotorisée.
